(19) Europäisches Patentamt
European Patent Office
Office européen des brevets

(11) **EP 4 459 363 B1**

(12) **EUROPEAN PATENT SPECIFICATION**

(45) Date of publication and mention
of the grant of the patent:
**11.02.2026  Bulletin 2026/07**

(21) Application number: **23315142.2**

(22) Date of filing: **02.05.2023**

(51) International Patent Classification (IPC):
**G02B 27/00** (2006.01)   **D06P 5/30** (2006.01)
**G02C 7/02** (2006.01)   **D06P 5/28** (2006.01)
**G02C 7/10** (2006.01)   **B29D 11/00** (2006.01)

(52) Cooperative Patent Classification (CPC):
**G02C 7/10; B29D 11/00009; B29D 11/00903;
G02B 27/0012; G02C 7/028;** D06P 5/004;
D06P 5/30

(54) **METHOD FOR OBTAINING AN OPTICAL LENS WITH A TARGET TINT**

VERFAHREN ZUR HERSTELLUNG EINER OPTISCHEN LINSE MIT EINER ZIELFÄRBUNG

PROCÉDÉ D'OBTENTION D'UNE LENTILLE OPTIQUE À TEINTE CIBLE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**06.11.2024  Bulletin 2024/45**

(73) Proprietor: **Essilor International
94220 Charenton-Le-Pont (FR)**

(72) Inventors:
• **Herfort, David
94300 VINCENNES (FR)**
• **Hamlaoui, Samy
75013 PARIS (FR)**
• **Muradore, Fabien
94700 Maisons-Alfort (FR)**
• **Mercier, Sylvain
94000 Maisons-Alfort (FR)**

(74) Representative: **Jacobacci Coralis Harle
32, rue de l'Arcade
75008 Paris (FR)**

(56) References cited:
**EP-A1- 3 605 202       JP-A- 2018 191 073
US-A1- 2020 257 139**

**Description**

The present invention generally relates to the field of eyeglasses.

It more particularly relates to the tinting of lenses.

BACKGROUND INFORMATION AND PRIOR ART

It is well-known to tint the lenses of sunglasses and eyeglasses, so as to protect the eyes of the wearer from the radiation of the sun.

To this end, most manufacturers of optical lenses offer a catalog of lenses, with a limited number of colors. Each time a new color is proposed in the catalog, several tests are necessary to obtain the desired tint (up to eight tests). -

To give more latitude in the choice of the tint of a lens, it can also be proposed to the wearer to indicate the color he prefers by bringing a sample of this color or to choose this color from a very large palette.

The major inconvenient in this case is that it is very difficult for the manufacturer to reproduce the exact desired color. In this. situation, the manufacturer often has to remanufacture several times lenses until reaching the desired tint, which is expensive and time-consuming.

EP3605202A1 discloses a method for determining a lens of customized color. It is also known from document JP2018191073 a method based on a neural network suitable to learn, on the basis of a set of a great number of learning examples, what is the best coloring recipe to tint a lens in order to satisfy the wearer.

The disadvantage of this method is that it requires a very large amount of data to fine-tune the neural network, which is time-consuming and expensive. Moreover, such a neural network forms a black box that is difficult to validate and that can sometimes present very erroneous results.

SUMMARY OF THE INVENTION

In this context, the present invention provides a simple and accurate solution to reproduce in a lens a color selected by a wearer.

More precisely, the method according to the invention (for obtaining an optical lens with a target tint) comprises steps of:

- providing a process for tinting the optical lens to the target tint and a set of process variables suitable to modify the target tint, each process variable being able to take a value that is selected among a group of possible values,

  A1) providing several optical lens samples tinted according to said process for tinting, wherein each optical lens sample is associated to a set of values (those used for obtaining the optical lens sample with said process),
  A2) measuring a measured tint of each optical lens sample,

- providing a first model receiving as an input a set of values for the process variables and giving as an output a first modelled tint for an optical lens tinted by said process,
- determining the first modelled tint of each optical lens sample by using said first model with said sets of values,
- providing a second model receiving as an input a set of values for the process variables and giving as an output a second modelled tint for an optical lens tinted by said process,

  A3) fine-tuning said second model by minimizing of a first function that depends on a gap between the measured tints and the first modelled tints for the optical lens samples,

- solving an inverse problem to invert said second model, said inverted second model receiving as an input the target tint and giving as an output a usable set of values for the process variables yielding the target tint, and performing the process using said usable set of values to obtain the optical lens having the target tint.

In other words, the invention proposes using models for determining the best recipe in order to obtain a lens having a target tint.

Here, the second model is deduced from the first one in the sense that they only differ by a gap named hereinafter "error function". Consequently, step A3 makes it possible to determine this error function in order to find the best second model. The solution according to the invention thus enables, based on the samples, to fine-tune this second model so as to always find the best recipe. Hence, it is possible to find an accurate model with fewer samples.

Another advantage of this solution is that, due to its simplicity, it is possible to understand how this model works and to determine easily in what extent this model will be accurate in any case.

Consequently, a new color in a catalog can be proposed more easily, and it is possible to offer new tints on demand.

Other preferred features of the invention are the following ones:

- said first model is based on a linear combination of the values of the process variables, said values preferably relating to concentration of dyes.
- said first model is based on the Beer-Lambert law.
- a tint is characterized by tint parameters.
- the second model is such that each tint parameter characterizing said second modelled tint depends on the sum of the corresponding tint parameter characterizing said first modelled tint and an error function, said first function depending also on said error function.
- each error function includes a sum of terms, each term comprising a multiplier coefficient determined in step A3).
- the error function comprises, for each of the tint parameters, a predetermined polynomial the term of which comprises, as variables, the process variables.
- to establish said error function, a regularization method is applied to said predetermined polynomial so as to identify, among its terms, the most relevant terms and at least one term to remove, said error function being then determined using only said relevant terms.
- said calculation is done for each of the measured tint.
- the error function comprises a predetermined polynomial using, as variables, the parameters characterizing the process variables.
- said error function comprises a sum of a second degree polynomial and of terms depending on the product of at least two parameters characterizing the process variables.
- said optical lens samples are divided into at least two groups that are distinct and disjoint.
- step A3) is performed on a first of said groups in order to determine said error functions.
- the method comprises steps of: A41) acquisition of the set of values for each optical lens sample belonging to the second of said groups, A42) measuring the measured tint of each optical lens sample belonging to the second of said groups, A43) predicting the tint of each optical lens sample belonging to the second of said groups, based on said second model and on the set of values acquired at sub-step A41), and A44) verifying said error function according to the difference between the measured tints and the predicted tints.
- at step A1), the sets of values are all different from each other.
- the steps are repeated with several groups of several samples, said groups being distinct and preferably not disjoint, so as to determine several error functions, a new error function being established as a function of the previously determined error functions.

In a preferred embodiment, the method comprises operations of:

E0) selecting a color sample by a user,
E1) determining a target tint of said color sample,
E4) acquiring a second model according to one of the preceding claims, and calculating a corresponding set of values for the process variables based on the second model and on said target tint, using an inverse problem optimization of the second model.

Other preferred features of the invention are the following ones:

- the color sample being formed by an optical lens or a lens template, after operation E4), said steps A1) to A3) are repeated by considering said optical lens samples and said color sample.
- during operation E1), the target tint is determined by means of an image sensor, in the visible range of light.
- during operation E1), the target tint is determined on the basis of several images of said sample of color, viewed from different angles and/or under different light conditions.
- during operation E1), the target tint is determined by acquiring an image of said color sample and of a color model, and by processing said image so that the tint of said color sample appearing on said processed image correspond to the tint of said color model.

DETAILED DESCRIPTION OF EXAMPLE(S)

The following description with reference to the accompanying drawings, given by way of non-limiting example makes it clear what the invention consists in and how it can be reduced to practice.

In the accompanying drawings:

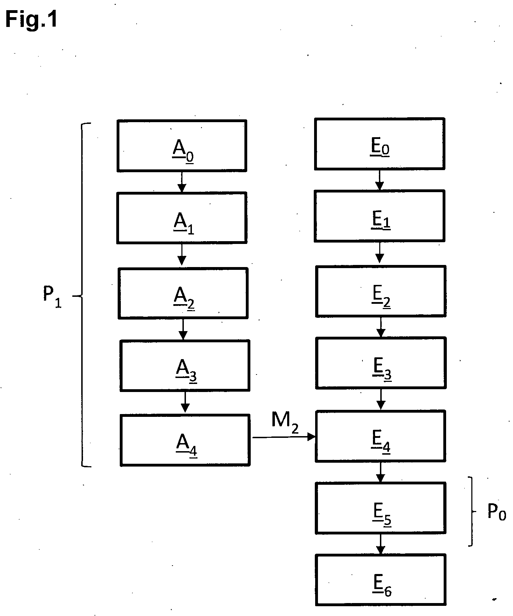

- Figure 1 is a diagram illustrating a process according to the invention.

The invention consists in characterizing a color and reproducing it in an optic lens.

In the following, the terms color and tint will be used to indicate the same notion, the term tint being used rather to designate the shade of the almost transparent lens. We can add that it will be considered in the following description that a color can be described by tint parameters (for instance a hue, a saturation and a lightness).

To perform the invention, a device such as a camera is required for acquiring images of a color selected by an individual (named hereinafter the wearer in the sense in that the lens is to be mounted in an eyeglasses frame worn by the individual).

To simplify, it will be considered that this camera is located in an optician shop.

A control unit is also required to process these images. Here, this control unit comprises a processing unit, such as a CPU, a memory and various input and output interfaces.

Thanks to its input interfaces, the processing unit is suitable for receiving the acquired images.

Thanks to its output interfaces, the processing unit is suitable for sending new images to a display screen observed by the optician and the wearer. It is also programmed to send data to a tinted lens manufacturing device.

Thanks to its memory, the processing unit stores a computer application consisting in computer programs comprising instructions, the execution of which by the processor enables the processing unit to implement the method described below.

This method first consists in finding a model (named hereinafter the second model $M_2$) matching a lens manufacturing recipe with a lens tint.

This second model $M_2$ is associated with a particular process $P_0$ for tinting an optical lens. In other words, this model is a recipe that is reliable only if the lens is manufactured by following a specific process $P_0$. Consequently, the manufacturing process $P_0$ comprises substantially unchangeable steps that have to be reproduced. That is why the preliminary operation consists in defining this process.

Of course, inside these process steps, it is possible to modify the values of parameters (also called "process variables" or process parameters $p_i$) in order to modify the tint of the obtained lens.

Here, the process P0 is based on a sublimation technology.

This process comprises a first step of depositing ink, by inkjet printing, on a transfer paper, according to a predetermined pattern, each dye being deposited and spread out in accordance with the tint and/or tint pattern that is planned for.

Then, during a second step, a face of the lens to be tinted is placed face to face with the transfer paper, at a distance from the latter, and the transfer paper is heated so as to sublimate the dyes which are then transferred onto the face of the lens.

Finally, during a third step, the dyes are fixed onto the lens, for example by way of permeation into the material.

Some example embodiments are disclosed in documents EP1637313, US6534443 or US6840621.

In variants, the process $P_0$ may be based on other technologies. For instance, it may consist in directly inking a surface of the lens, or in tinting the lens in the mass (in the whole material), or in tinting the lens by surface impregnation...

The parameters $p_i$ characterizing the process $P_0$ may comprise parameters related to the tints themselves or to the process itself, such as a kind of transfer paper, a distance between this paper and the lens...

In the embodiment used as an applicative example, we will consider that they only comprise the proportions of ingredients for tinting the lens. In this embodiment, the number of parameters is equal to three in the sense in that only three dyes are used to tint a lens. One of these parameters is the amount R of magenta dye in the material used for molding the lens. Another parameter is the amount Y of yellow dye, and the last parameter is the amount B of cyan dye. Of course, in a variant, another triplet of colors may be used to tint the lens. In another variant, the number of dyes may be greater (for instance, we may use some black, or two red tints, or two different cyan/blue tints).

Each rate R, Y, B, that is to say each process parameter $p_i$, is selected among a group of possible values. Here, each amount corresponds to a dose used by the machine. Each process parameter $p_i$ may thus have a value $v_i$ expressed in percentage by an integer, or in dpi, or a concentration, or any other unit relevant to the process $P_0$.

The process $P_0$ is said parametrized when the values $v_i$ of each process parameter $p_i$ is determined.

Before describing more precisely the process $P_0$, we can first describe the second model $M_2$, and how it is set.

Here, the solution is based on a first model able to match a set of values $v_i$ with a modeled tint.

In this regard, it can be noted that several solutions can be used to characterize a tint.

In the considered embodiment, the CIELAB color space is chosen over other color spaces not only because of simple, homogeneous, and uniform color distribution but also because of the perceived effectiveness of CIELAB color differences.

In this color system, a color can be defined by three data: a clarity or lightness referenced L (0 for black and 100 for white) and two coordinates referenced a and b. These two coordinates a, b relate to the hue and the chroma (or saturation) of the color.

Here, the first model $M_1$ is more specifically established so as to be able to calculate the values of the tint parameters L, a, b according to the values $v_i$ of the process parameters $p_i$ (R, Y, B).

This first model $M_1$ matches these values in a simple and possibly imprecise manner.

In the current embodiment it is here established according to the Beer-Lambert Law.

According to this first model, the tint parameters L, a, b form predetermined functions $L_{M1}$, $a_{M1}$, $b_{M1}$ varying according to the set of values $v_i$.

These functions are already known but they can also be set by using preliminary samples for which only one value among the set of values $v_i$ of the process parameters $p_i$ (R, Y, B) is non-null.

More precisely, we can use at least three preliminary lens samples made with only magenta dye with three different values of intensity (here values of intensity can be concentrations or number of droplet per pixel...), at least three preliminary lens samples made with only yellow dye at three different values of intensity, and at least three preliminary lens samples made with only cyan dye at three different values of intensity.

Each triplet of samples enables to determine a linear equation illustrating the variation of each tint parameter L, a, b as a function of the variation of the concentration of each dye, and a threshold beyond which the tint parameter saturates whatever the value of the concentration beyond this threshold.

The inventors have identified that while the BeerLambert Law works well for handling the tint of liquids, it is less accurate to describe the tinting processes of complex colors onto lenses. Indeed, the process may have nonlinear transfer kinetics, different for each dye, and/or there can be interaction between dyes, changing the transfer kinetics of one or more dyes. Accordingly, it is important to define a second model $M_2$ to find a more accurate recipe. This second model M2 is based on the first one and is improved to match the tint parameters L, a, b with the set values $v_i$ of the process parameters $p_i$ in a more accurate manner.

This second model is here defined according to the functions $L_{M1}$, $a_{M1}$, $b_{M1}$ issued from the first model $M_1$ and to error functions $Error^L$, $Error^a$, $Error^b$, one per function of the model $M_1$.

More precisely, according to this second model $M_2$, each tint parameter $L_{M2}$, $a_{M2}$, $b_{M2}$ is equal to the sum of the corresponding tint parameter $L_{M1}$, $a_{M1}$ or $b_{M1}$ issued from the first model and a corresponding error function $Error^L$, $Error^a$, $Error^b$.

We can write:

$$L_{M2}(v_i) = L_{M1}(v_i) + Error^L(v_i)$$

$$a_{M2}(v_i) = a_{M1}(v_i) + Error^a(v_i)$$

$$b_{M2}(v_i) = b_{M1}(v_i) + Error^b(v_i)$$

We note that each error function depends on the set of values $v_i$ of the process parameters $p_i$ (R, Y, B).

In this embodiment, each error function is polynomial. More precisely, each error function is equal to a sum of terms, each term comprising a multiplier coefficient $\alpha_0$, $\alpha_1$,..., $\alpha_{10}$ applied to at least one value $v_i$.

In an embodiment, the polynomial error functions are based on a second degree polynomial function and they may further include one or more component of the third or fourth order, especially one taking into account two, three, or more process parameters together.

We can write:

$$Error^L(v_i)$$
$$= \alpha_0{}^L + \alpha_1{}^L.R + \alpha_2{}^L.Y + \alpha_3{}^L.B + \alpha_4{}^L.R^2 + \alpha_5{}^L.Y^2 + \alpha_6{}^L.B^2 + \alpha_7{}^L.R.Y + \alpha_8{}^L.R.B$$
$$+ \alpha_9{}^L.Y.B + \alpha_{10}{}^L.R.Y.B$$

$$Error^a(v_i)$$
$$= \alpha_0{}^a + \alpha_1{}^a.R + \alpha_2{}^a.Y + \alpha_3{}^a.B + \alpha_4{}^a.R^2 + \alpha_5{}^a.Y^2 + \alpha_6{}^a.B^2 + \alpha_7{}^a.R.Y + \alpha_8{}^a.R.B$$
$$+ \alpha_9{}^a.Y.B + \alpha_{10}{}^a.R.Y.B$$

$$Error^b(\mathrm{v}_i)$$

$$= \alpha_0{}^b + \alpha_1{}^b . R + \alpha_2{}^b . Y + \alpha_3{}^b . B + \alpha_4{}^b . R^2 + \alpha_5{}^b . Y^2 + \alpha_6{}^b . B^2 + \alpha_7{}^b . R . Y + \alpha_8{}^b . R . B$$

$$+ \alpha_9{}^b . Y . B + \alpha_{10}{}^b . R . Y . B$$

In these equations, it is recalled that R, Y and B form the set of values $v_i$ for the process parameters $p_i$.

The aim is to fine-tune the multiplier coefficients $\alpha_0{}^L$-$\alpha_{10}{}^L$, $\alpha_0{}^a$-$\alpha_{10}{}^a$, $\alpha_0{}^b$-$\alpha_{10}{}^b$ to find the best equations of the three error functions. Indeed, once these coefficients determined, the second model $M_2$ will be well defined, and it will be considered that it is possible to match a set of values $v_i$ with tint parameters $p_i$ whatever these values $v_i$.

To fine-tune the multiplier coefficients values, the following process $P_1$ is used (see Figure 1).

This process $P_1$ comprises of preliminary step $A_0$ of acquiring a set of optical lens samples $S_j$. This set comprises preferably more than fifty lens samples. Here, it comprises two hundreds and twenty lens samples $S_j$.

These lens samples $S_j$ are divided in two disjoint groups $G_i$ and $G_{i'}$. These groups may comprise distinct numbers of samples, but here, each group comprises exactly half of the total number of samples of the assembly.

The first group $G_i$ of lens samples $S_j$ is used to determine the multiplier coefficients $\alpha_0{}^L$-$\alpha_{10}{}^L$, $\alpha_0{}^a$-$\alpha_{10}{}^a$, $\alpha_0{}^b$-$\alpha_{10}{}^b$ of the error functions as mentioned above, and described in further details below. The other group $G_{i'}$ is used to check whether the obtained error functions are accurate or not.

For fine-tuning these multiplier coefficients, the process comprises a first step $A_1$ of acquiring the values $v_{i,j}$ of the process parameters $p_i$ for each lens sample $S_j$ of the first group (the subscript j corresponding to the considered lens sample). For instance, we can consider that these values are already known because the lens samples have been manufactured according to the selected manufacturing process $P_0$.

The process then comprises a second step $A_2$ of acquiring the values $L_j$, $a_j$, $b_j$ of the tint parameters for each lens sample $S_j$ of the first group $G_i$. Here, these values are mor precisely measured. This step is for instance performed thanks to a spectrophotometer, in the visible range of light.

The third step $A_3$ consists in evaluating the multiplier coefficients $\alpha_0{}^L$-$\alpha_{10}{}^L$, $\alpha_0{}^a$-$\alpha_{10}{}^a$, $\alpha_0{}^b$-$\alpha_{10}{}^b$ as a function of the measured values $L_j$, $a_j$, $b_j$ and of the values $v_{i,j}$ of the process parameters $p_i$ for the lens samples $S_j$ of the first group $G_i$.

To this end, first functions $f^L$, $f^a$, $f^b$ are introduced.

These first functions $f^L$, $f^a$, $f^b$ depend on a gap between the measured values $L_j$, $a_j$, $b_j$ and the values $L_{M1}$, $a_{M1}$, $b_{M1}$ issued from the first model $M_1$ (that have to be calculated for each lens sample $S_j$).

More precisely, here, they depend on the gaps between the measured values $L_j$, $a_j$, $b_j$ and the values $L_{M2}$, $a_{M2}$, $b_{M2}$ issued from the second model $_{M2}$ for each lens sample.

We can write:

$$f^L(\alpha_0{}^L, \alpha_1{}^L, \ldots, \alpha_{10}{}^L) = \frac{1}{2} \sum_j (L_j(v_{i,j}) - L_{M1}(v_{i,j}) - Error^L(v_{i,j}))^2$$

$$f^a(\alpha_0{}^a, \alpha_1{}^a, \ldots, \alpha_{10}{}^a) = \frac{1}{2} \sum_i (a_j(v_{i,j}) - a_{M1}(v_{i,j}) - Error^a(v_{i,j}))^2$$

$$f^b(\alpha_0{}^b, \alpha_1{}^b, \ldots, \alpha_{10}{}^b) = \frac{1}{2} \sum_i (b_j(v_{i,j}) - b_{M1}(v_{i,j}) - Error^b(v_{i,j}))^2$$

Then, each of the following functions $f^L$, $f^a$, $f^b$ are minimized to find the best multiplier coefficients $\alpha_0{}^L$-$\alpha_{10}{}^L$, $\alpha_0{}^a$-$\alpha_{10}{}^a$, $\alpha_0{}^b$-$\alpha_{10}{}^b$ adapted to the first group $G_i$ of samples. It is a linear least squares problem and a linear system is thus solved.

Then, the process $P_1$ comprises a fourth step $A_4$ for validating the obtained error functions. This step $A_4$ comprises four sub-steps.

The first sub-steps a41) consists in acquiring the sets of values $v_{i,j}$ of the process parameters $p_i$ (R, Y, B) of the lens samples $S_j$ belonging to the second group $G_{i'}$.

The second sub-steps a42) consists in measuring the values $L_j$, $a_j$, $b_j$ of the tint parameters L, a, b of these lens samples $S_j$.

The third sub-steps a43) consists in predicting the values $L_{M2}$, $a_{M2}$, $b_{M2}$ of the tint parameters L, a, b of these lens samples $S_j$, based on the second model $M_2$ (set thanks to the samples of the first group $G_i$) and thanks to the values $v_{i,j}$ of

the process parameters $p_i$ acquired at sub-step a41).

The fourth sub-steps a44) consists in evaluating the accuracy of said second model $M_2$ according to the values $L_{M2}$, $a_{M2}$, $b_{M2}$ predicted a sub-step a43) and the values $L_j$, $a_j$, $b_j$ measured at sub-step a42).

During this fourth sub-steps a44), the evaluation of the quality of the second model $M_2$ can be performed by means of an ECMCmetric test. This test is able to assess whether the values predicted a sub-step a43) and the values measured at sub-step a42) are close enough.

According to this test, the difference $\Delta E$ between these values can be determined by the following function:

$$\Delta E = \sqrt{\left(\frac{\Delta L}{l.S_L}\right)^2 + \left(\frac{\Delta C}{c.S_C}\right)^2 + \left(\frac{\Delta H}{S_H}\right)^2}$$

In this equation:

¤ l and c are two parameters that can be adjusted. For instance, l is equal to 1 or 2 and c is equal to 1.

$$\Delta C = C_{M2} - C_j$$

$$C_{M2} = \sqrt{a_{M2}^2 + b_{M2}^2}$$

$$C_j = \sqrt{a_j^2 + b_j^2}$$

$$\Delta H = \sqrt{\Delta a^2 + \Delta b^2 - \Delta C^2}$$

$$\Delta L = L_{M2} - L_j$$

$$\Delta a = a_{M2} - a_j$$

$$\Delta b = b_{M2} - b_j$$

$$S_L = 0.511 \; if \; L_{M2} < 16$$

$$S_L = \frac{0.040975.L_{M2}}{1 + 0.01765.L_{M2}} \; if \; L_{M2} \geq 16$$

$$S_C = \frac{0.0638.C_{M2}}{1 + 0.0131.C_{M2}} + 0.638$$

$$S_H = S_C.(F.T + 1 - F)$$

$$T = 0.56 + |0.2.\cos(H_{M2} + 168°)| \; if \; H_{M2} \in [164°; 345°]$$

$$T = 0.36 + |0.4.\cos(H_{M2} + 35°)| \; otherwise$$

$$F = \sqrt{\frac{C_{\text{M2}}^4}{C_{\text{M2}}^4 + 1900}}$$

$$H = \arctan\left(\frac{b_{M2}}{a_{M2}}\right)$$

$$H_{M2} = H \text{ if } H \geq 0$$

$$H_{M2} = H + 360° \text{ otherwise}$$

In other words, this test measures the accuracy of the second model established using the lens samples of the first group $G_i$, thanks to the difference $\Delta E$, for each lens sample of the second group $G_{i'}$.

If all the calculated differences are below a predetermined threshold, it is here considered that the found second model, and therefore the determined error functions (i.e. the multiplier coefficients $\alpha_0^L$-$\alpha_{10}^L$, $\alpha_0^a$-$\alpha_{10}^a$, $\alpha_0^b$-$\alpha_{10}^b$) are accurate enough to keep the set second model $M_2$.

It is to be noted, now that the $\Delta E$ calculation has been described, that the disclosure may apply to determine the coefficient of the error functions by solving a least square problem of a function F depending on all the parameters and coefficients of the error functions, and aimed to minimize the sum of the $\Delta E$ and the first model data. Other minimization functions may also be used to determine the coefficients of the error functions.

In this case, we are solving a nonlinear least square problem which corresponds to minimizing the function F:

$$F\left(\alpha_0^L, \ldots, \alpha_{10}^L, \alpha_0^a, \ldots, \alpha_{10}^a, \alpha_0^b, \ldots, \alpha_{10}^b\right) = \sqrt{\sum_j^\Delta E_j\left(\alpha_0^L, \ldots, \alpha_{10}^L, \alpha_0^a, \ldots, \alpha_{10}^a, \alpha_0^b, \ldots, \alpha_{10}^b\right)^2}$$

$$\Delta E_j\left(\alpha_0^L, \ldots, \alpha_{10}^L, \alpha_0^a, \ldots, \alpha_{10}^a, \alpha_0^b, \ldots, \alpha_{10}^b\right) = \sqrt{\left(\frac{\Delta L_j}{l.S_L}\right)^2 + \left(\frac{\Delta C_j}{c.S_C}\right)^2 + \left(\frac{\Delta H_j}{S_H}\right)^2}$$

$$a_{M2,j} = a_{M1}\left(v_{i,j}\right) + Error^a\left(v_{i,j}\right)$$

$$b_{M2,j} = b_{M1}\left(v_{i,j}\right) + Error^b\left(v_{i,j}\right)$$

$$L_{M2,j} = L_{M1}\left(v_{i,j}\right) + Error^L\left(v_{i,j}\right)$$

$$\Delta L_j = L_{M2,j} - L_j$$

$$\Delta a_j = a_{M2,j} - a_j$$

$$\Delta b_j = b_{M2,j} - b_j$$

$$C_{M2,j} = \sqrt{a_{M2,j}^2 + b_{M2,j}^2}$$

$$C_j = \sqrt{a_j^2 + b_j^2}$$

$$\Delta C_j = C_{M2,j} - C_j$$

$$\Delta H_j = \sqrt{\Delta a_j{}^2 + \Delta b_j{}^2 - \Delta C_j{}^2}$$

In an embodiment, the previous steps are repeated with several groups $G_i$ of several samples, selected within the same set of samples $S_j$ or using other sets of samples, so as to determine several error functions and associated accuracies (the differences $\Delta E$).

In the current embodiment, the groups $G_i$, $G_{i'}$, of samples are chosen among the 220 samples of the assembly.

The selection of samples in each group $G_i$, $G_{i'}$ are distinct from those chosen previously in another couple of group $G_i$, $G_{i'}$. Here again, both groups $G_i$, $G_{i'}$ comprise 110 samples. They are for instance chosen randomly.

The steps are repeated at least 10 times, and here 50 times.

At the end, the process unit has defined 50 triplets of error functions, and 50 accurate rates.

Using those 50 triplets, it is possible to determine if some of the terms of each error function can be removed to simplify the calculation and/or to make it more accurate.

To this end, a fine-tuning method is applied to these error functions.

For instance, second model approximations can be built based on different groups of lens samples and triplets of error functions, and a final model can be built by comparing the different approximations and by removing the coefficients that vary the most between the approximations. These coefficients are indeed considered to be too "noise-related". The coefficients that are removed are for instance the N multiplier coefficient that vary the most (N being a predetermined integer), or those the variations of which are greater than a preset threshold.

At this step, the second model $M_2$ is re-calculated, based on a group $G_i$ of samples but with the error functions having some coefficient already been set with a value of 0; the minimization being done only on the other coefficients. Accordingly, it is possible to calculate the tint parameters L, a, b on the basis on the set of values $v_i$ of the process parameters $p_i$ (R, Y, B), without taking into account the coefficients more prone to variability.

Alternatively, the fine-tuning step may be replaced by a regularization method, using a sole group of samples $G_i$.

Thus, whether with or without the fine-tuning, the disclosure enables to define a second model which enables to predict tint parameters based on inputted process parameters.

We can note here that this second model is preferably considered as valid only for one lens substrate material. In other words, the coefficients of the second model have to be calculated for each material. On the contrary, the first model preferably does not depend on the material of the substrate (but in a variant, it could depend on it too).

Advantageously, this second model can be inverted, so that it is possible to determine a set of values $v_i$ of process parameters on the basis of the values of target tint parameters L, a, b. This may be done using optimization processes such as for example Newton-like methods.

It is then possible to perform the following process for determining a color to be applied to a lens and for manufacturing a lens having this tint.

This process comprises several steps performed the one after the other.

A preliminary step $E_0$ consists for the wearer in selecting a color.

This step can be performed in many ways.

For instance, the wearer can bring an element having the selected color (a piece of cloth, a piece of paper...).

Alternatively, he can go to his optician shop and choose a spectacle frame. In this case, the control unit makes it possible to enter the reference of the frame (or its color) so as to be able to offer a restricted choice of available possibilities of tints. Consequently, the tint is chosen among a limited number of colors that suit with the frame (including the frame color). Then, the wearer can request a modification of this color, for example by using a suitable software.

The optician may also use a prior tinted lens to determine the chosen tint.

At this stage, it will be considered that the tint chosen by the wearer has never been produced by the manufacturer of optical lenses yet.

Otherwise, as will be described later (step $E_6$), the recipe for coloring the lens will already be known and can therefore be read and applied as it is.

Then, the first step $E_1$ consists in characterizing this color, named target tint.

In other words, the aim is to determine the values Lt,at,bt of the target tint parameters L, a, b.

If the wearer has selected the color on a software, this determination is easy to perform.

But if he has brought an element having the desired color, this determination is performed otherwise.

To this end, the color of the brought element is acquired via a camera system. To this end, the control unit displays on a screen an image of the sample and a target showing where the color will be determined.

The size and the position of this target can be modified by the optician, for instance to adjust its size to the one of the entire brought element.

In a preferred embodiment, several images of this brought element are acquired under different angles and/or under different light conditions, and a target color of the brought element is calculated on the basis of all these images (for instance by an average calculation, or pondered or corrected calculation).

In a variant or in addition, a referent element having a known color is put next to the brought element in such a manner that both elements are visible by the camera system. The referent element is for instance a piece of colored paper having a known Pantone code. Then, the control unit can determine the color of the referent element on the acquire image and correct the color of the entire image so that the referent element color corresponds exactly to the known color. Finally, the color of the brought element can be determined on this corrected image.

In a variant, the referent element can be observed near distinct colors, for example present in distinct areas, for instance primary colors, that are known and that have known intensities. Hence, the exact color of the brought element can be determined more accurately.

It can be noted that the brought element can be of various nature and structure, transparent or opaque. Consequently, its appearance can be matte, satin or shiny, or even transparent or opaque. Hence, in a variant or in addition, the process unit can determine the light reflection rate of this brought element and correct the acquired image as a function of this rate.

In a variant or in addition, it is possible to use distinct illuminants to determine the exact color of the brought element.

There is indeed a possibility of taking into account the type of illuminant of the environment, for instance by a declarative system taking into account an average reference spectrum or any useful data, as well as the material of the element. Consequently, an illuminant used during the acquisition of the color is registered and an interpretation of the color is performed by subtracting the luminant spectrum from the measured values. In a variant, to overcome the effect of metamerism, several reference illuminants are applied to the acquired image as well as a standard in order to measure its influence and sensitivity to the color.

In a variant or in addition, it is possible to automatically adjust the acquired color, especially when the brought element is a solid, so as to transform it into a semi-visible color (that is to say a color tinting a transparent lens).

A second step $E_2$ consists for the wearer, or the optician or another eye-care professional, in modifying the acquired color to take into account the expected result of the wearer (and technical constraints if any).

To this end, the wearer or the optician can use a suitable software to show on a display screen the acquired color and to enable the wearer to modify the target tint (that is to say at least one of the tint parameters - hue, saturation or luminosity).

When the target tint is determined, during a third step $E_3$, the control unit calculates the values $L_t$, $a_t$, $b_t$ of the tint parameters of the target color.

As explained above, in the described embodiments, these parameters are expressed in the CELIAB system but in a variant, they may be expressed in another system (for instance in the RGB system).

Then, the control unit check whether these values $L_t, a_t, b_t$ are already known in its database or not.

In the following, we will consider that they are not known.

Here, we can note that the control unit may be present at the opticians, or may be in a remote location on a server, for example a server of the manufacturer of lenses or in a cloud.

Then, at a fourth step $E_4$, the control unit calculates, from these values, the instructions necessary for reproducing the color on the optic lens, that is to say the set of values $v_{i,t}$ (R, Y, B) of the process parameters $p_i$.

To this end, the control unit uses the second model $M_2$ and more precisely uses an optimization method to invert the second model. Here, we can note that this control unit is not necessarily the same as the one used before. This unit preferably belongs to the lens manufacturer. Accordingly, it may be a different control unit than the one used during steps $E_2$ and $E_3$, or it may be the same control unit if step $E_3$ or even $E_2$ are done on the manufacturer's side.

Then, during a fifth step $E_5$, the optic lens is manufactured using the selected process $P_0$ with the above set of values $v_{i,t}$ for the process parameters.

As explained above, at this step, the tinting of the lens can be performed in various ways, for instance by inkjet, sublimation transfer, imbibition...

After production of the lens, the values $L_t, a_t, b_t$ characterizing the target color and the corresponding set of values $v_{i,t}$ can be recorded in a database during a sixth step $E_6$.

To improve the second model, it is indeed possible to measure the tint of the obtained lens (which will be very close to the target color but possibly slightly different from it since the second model is not necessarily perfect) then to use this obtained lens as a new lens sample (the pool of lens samples being then enriched little by little). In other words, the pool of lens samples can be enriched while producing new tints, the second model being regularly recalculated based on this enriched sample pool.

In particular, the process is here characterized by the three process parameters $p_i$ that are the amounts R, G and B related only to the dyes used in the process. But in a variant, other process parameters may be taken into account, for instance the local hydrometry, the temperature, the pressure, the kind of supporting paper for sublimation, the reference number of the used machine... In these variants, when changing location or machine to perform the manufacturing process $P_0$, the whole method may be reapplied to reset the second model $M_2$. When changing parameters of the process $P_0$ that are not taken into account in an initial formation of the second model M2, the whole method may be reapplied to reset the second model M2, but with equations integrating further parameters than R, G, B. In a variant, when taking into account these process parameters initially not taken into account, the principle of the disclosure may be used to determine a new model M3, using the second model M2, previously determined, in place of the reference model M1.

## Claims

1. Method for obtaining an optical lens with a target tint (Lt,at,bt) comprising steps of:

    - providing a process ($P_0$) for tinting optical lenses and a set of process variables ($p_i$) suitable to modify the tints of the optical lenses, each process variable ($p_i$) being able to take a value ($v_i$) that is selected among a group of possible values,

       A1 - providing several optical lens samples ($S_j$) tinted according to said process ($P_0$), wherein each optical lens sample ($S_j$) is associated to a set of values ($v_{i,j}$) for said process variables ($p_i$) used for obtaining the optical lens sample ($S_j$) with said process ($P_0$),
       A2 - measuring a measured tint ($L_j,a_j,b_j$) of each optical lens sample ($S_j$),

    - providing a first model ($M_1$) receiving as an input a set of values for the process variables ($p_i$) and giving as an output a first modelled tint for an optical lens tinted by said process ($P_0$),
    - determining the first modelled tint ($L_{M1},a_{M1},b_{M1}$) of each optical lens sample ($S_j$) by using said first model with said sets of values ($v_{i,j}$),
    - providing a second model ($M_2$) receiving as an input a set of values for the process variables ($p_i$) and giving as an output a second modelled tint for an optical lens tinted by said process,
    A3 - fine-tuning said second model ($M_2$) by minimizing of a first function ($f^L$, $f^a$, $f^b$) that depends on a gap between the measured tints ($L_j,a_j,b_j$) and the first modelled tint ($L_{M1},a_{M1},b_{M1}$) for the optical lens samples ($S_j$),
    - solving an inverse problem to invert said second model ($M_2$), said inverted second model receiving as an input the target tint (Lt,at,bt) and giving as an output a usable set of values ($v_{i,t}$) for the process variables yielding the target tint (Lt,at,bt), and performing the process ($P_0$) using said usable set of values ($v_{i,t}$) to obtain the optical lens having the target tint ($L_t,a_t,b_t$).

2. Method according to claim 1, wherein said first model ($M_1$) is based on a linear combination of the values ($v_i$) of the process variables ($p_i$), said values preferably relating to concentration of dyes.

3. Method according to claim 2, wherein said first model ($M_1$) is based on the Beer-Lambert law.

4. Method according to any one of claims 1 to 3, wherein a tint is **characterized by** tint parameters (L, a, b), and wherein the second model ($M_2$) is such that each tint parameter (L, a, b) characterizing said second modelled tint depends on the sum of the corresponding tint parameter (L, a, b) characterizing said first modelled tint and an error function ($Error^L$, $Error^a$, $Error^b$), said first function ($f^L$, $f^a$, $f^b$) depending also on said error function ($Error^L$, $Error^a$, $Error^b$).

5. Method according to claim 4, wherein each error function ($Error^L$, $Error^a$, $Error^b$) includes a sum of terms, each term comprising a multiplier coefficient determined in step A3).

6. Method according to any one of claims 4 and 5, wherein the error function ($Error^L$, $Error^a$, $Error^b$) comprises, for each of the tint parameters (L,a,b), a predetermined polynomial the term of which comprises, as variables, the process variables ($p_i$).

7. Method according to claim 6, wherein, to establish said error function ($Error^L$, $Error^a$, $Error^b$), a regularization method is applied to said predetermined polynomial so as to identify, among its terms, the most relevant terms and at least one term to remove, said error function ($Error^L$, $Error^a$, $Error^b$) being then determined using only said relevant terms.

8. Method according to any one of claims 4 to 7, wherein said optical lens samples (S$_j$) are divided into at least two groups that are distinct and disjoint, wherein step A3) is performed on a first of said groups in order to determine said error functions (Error$^L$, Error$^a$, Error$^b$), and wherein the method comprises steps of:

a41) acquisition of the set of values (v$_{i,j}$) for each optical lens sample belonging to the second of said groups,
a42) measuring the measured tint (L$_j$,a$_j$,b$_j$) of each optical lens sample (S$_j$) belonging to the second of said groups,
a43) predicting the tint (L,a,b) of each optical lens sample (S$_j$) belonging to the second of said groups, based on said second model and on the set of values (v$_{i,j}$) acquired at sub-step a41),
a44) verifying said error function according to the difference between the measured tints (L$_j$,a$_j$,b$_j$) and the predicted tints (L,a,b).

9. Method according to one of claims 1 to 8, wherein at step A1), the sets of values (v$_{i,j}$) are all different from each other.

10. Method according to one of claims 1 to 9, comprising operations of:

E0) selecting a color sample by a user,
E1) determining a target tint (Lt,at,bt) of said color sample,
E4) acquiring said second model (M$_2$) and calculating a corresponding set of values (v$_{i,t}$) for the process variables (p$_i$) based on the second model and on said target tint (Lt,at,bt), using an inverse problem optimization of the second model.

11. Method according to claim 10, wherein, the color sample being formed by an optical lens or a lens template, after operation E4), said steps A1) to A3) are repeated by considering said optical lens samples and said color sample.

12. Method according to one of claims 10 and 11, wherein during operation E1), the target tint (Lt,at,bt) is determined by means of an image sensor, in the visible range of light.

13. Method according to one of claims 10 to 12, wherein during operation E1), the target tint (L$_t$,a$_t$,b$_t$) is determined on the basis of several images of said sample of color, viewed from different angles and/or under different light conditions.

14. Method according to one of claims 10 to 13, wherein during operation E1), the target tint (Lt,at,bt) is determined by acquiring an image of said color sample and of a color model, and by processing said image so that the tint (L,a,b) of said color sample appearing on said processed image correspond to the tint of said color model.

**Patentansprüche**

1. Verfahren zum Erhalten einer optischen Linse mit einer Zieltönung (L$_t$, a$_t$, b$_t$) , umfassend die Schritte:

- Bereitstellen eines Prozesses (P$_0$) zum Tönen optischer Linsen und eines Satzes von Prozessvariablen (p$_i$), die geeignet sind, die Tönungen der optischen Linsen zu modifizieren, wobei jede Prozessvariable (p$_i$) einen Wert (v$_i$) annehmen kann, der aus einer Gruppe möglicher Werte ausgewählt wird;

A1 - Bereitstellen mehrerer optischer Linsenproben (S$_j$), die gemäß dem Prozess (P$_0$) getönt sind, wobei jede optische Linsenprobe (S$_j$) mit einem Satz von Werten (v$_{i,j}$) für die Prozessvariablen (p$_i$) assoziiert ist, der zum Erhalten der optischen Linsenprobe (S$_j$) mit dem Prozess (P$_0$) verwendet worden ist,
A2 - Messen einer gemessenen Tönung (L$_j$,a$_j$,b$_j$) jeder optischen Linsenprobe (S$_j$),

- Bereitstellen eines ersten Modells (M$_1$), das als eine Eingabe einen Satz von Werten für die Prozessvariablen (p$_i$) empfängt und als eine Ausgabe eine erste modellierte Tönung für eine durch den Prozess getönte optische Linse (P$_0$) gibt,
- Bestimmen der ersten modellierten Tönung (L$_{M1}$, a$_{M1}$, b$_{M1}$) jeder optischen Linsenprobe (S$_j$) unter Verwendung des ersten Modells mit den Sätzen von Werten (v$_{i,j}$),
- Bereitstellen eines zweiten Modells (M$_2$), das als eine Eingabe einen Satz von Werten für die Prozessvariablen (p$_i$) empfängt und als eine Ausgabe eine zweite modellierte Tönung für eine durch den Prozess getönte optische Linse gibt,
A3 - Feinabstimmen des zweiten Modells (M$_2$) durch Minimieren einer ersten Funktion (f$^L$, f$^a$, f$^b$), die von einer Lücke zwischen den gemessenen Tönungen (L$_j$,a$_j$,b$_j$) und der ersten modellierten Tönung (L$_{M1}$, a$_{M1}$, b$_{M1}$) für die

optischen Linsenproben ($S_j$) abhängt,
- Lösen eines inversen Problems, um das zweite Modell ($M_2$) zu invertieren, wobei das invertierte zweite Modell als eine Eingabe die Zieltönung ($L_t$, $a_t$, $b_t$) empfängt und als eine Ausgabe einen verwendbaren Satz von Werten ($v_{i,t}$) für die Prozessvariablen gibt, die die Zieltönung ($L_t$,$a_t$,$b_t$) ergeben, und Durchführen des Prozesses ($P_0$) unter Verwendung des verwendbaren Satzes von Werten ($v_{i,t}$), um die optische Linse mit der Zieltönung ($L_t$,$a_t$,$b_t$) zu erhalten.

2. Verfahren nach Anspruch 1, wobei das erste Modell ($M_1$) auf einer linearen Kombination der Werte ($v_i$) der Prozessvariablen ($p_i$) basiert, wobei sich die Werte vorzugsweise auf die Konzentration von Farbstoffen beziehen.

3. Verfahren nach Anspruch 2, wobei das erste Modell ($M_1$) auf dem Lambert-Beerschen Gesetz basiert.

4. Verfahren nach einem der Ansprüche 1 bis 3, wobei eine Tönung durch Tönungsparameter (L, a, b) gekennzeichnet ist, und wobei das zweite Modell ($M_2$) derart ist, dass jeder Tönungsparameter (L, a, b), der die zweite modellierte Tönung charakterisiert, von der Summe des entsprechenden Tönungsparameters (L, a, b), der die erste modellierte Tönung charakterisiert, und einer Fehlerfunktion (Fehler$^L$, Fehler$^a$, Fehler$^b$) abhängt, wobei die erste Funktion (f$^L$, f$^a$, f$^b$) auch von der Fehlerfunktion (Fehler$^L$, Fehler$^a$, Fehler$^b$) abhängt.

5. Verfahren nach Anspruch 4, wobei jede Fehlerfunktion (Fehler$^L$, Fehler$^a$, Fehler$^b$) eine Summe von Termen einschließt, wobei jeder Term einen in Schritt A3) bestimmten Multiplikatorkoeffizienten umfasst.

6. Verfahren nach einem der Ansprüche 4 und 5, wobei die Fehlerfunktion (Fehler$^L$, Fehler$^a$, Fehler$^b$) für jeden der Tönungsparameter (L,a,b) ein vorbestimmtes Polynom umfasst, dessen Term die Prozessvariablen ($p_i$) als Variablen umfasst.

7. Verfahren nach Anspruch 6, wobei zum Erstellen der Fehlerfunktion (Fehler$^L$, Fehler$^a$, Fehler$^b$) ein Regularisierungsverfahren auf das vorbestimmte Polynom angewendet wird, um innerhalb seiner Terme die relevantesten Terme und mindestens einen zu entfernenden Term zu identifizieren, wobei die Fehlerfunktion (Fehler$^L$, Fehler$^a$, Fehler$^b$) dann unter Verwendung nur der relevanten Terme bestimmt wird.

8. Verfahren nach einem der Ansprüche 4 bis 7, wobei die optischen Linsenproben ($S_j$) in mindestens zwei Gruppen unterteilt werden, die unterschiedlich und disjunkt sind, wobei Schritt A3) an einer ersten der Gruppen durchgeführt wird, um die Fehlerfunktionen (Fehler$^L$, Fehler$^a$, Fehler$^b$) zu bestimmen, und wobei das Verfahren die Schritte umfasst:

a41) Erfassen des Satzes von Werten ($v_{i,j}$) für jede optische Linsenprobe, die zu der zweiten der Gruppen gehört,
a42) Messen der gemessenen Tönung ($L_j$, $a_j$, $b_j$) jeder optischen Linsenprobe ($S_j$), die zu der zweiten dieser Gruppen gehört,
a43) Vorhersagen der Tönung (L,a,b) jeder optischen Linsenprobe ($S_j$), die zu der zweiten der Gruppen gehört, basierend auf dem zweiten Modell und dem Satz von Werten ($v_{i,j}$), der in Unterschritt a41) erfasst wurde,
a44) Verifizieren der Fehlerfunktion gemäß der Differenz zwischen den gemessenen Tönungen ($L_j$, $a_j$, $b_j$) und den vorhergesagten Tönungen (L,a,b).

9. Verfahren nach einem der Ansprüche 1 bis 8, wobei bei Schritt A1) die Sätze von Werten ($V_{i,j}$) alle voneinander verschieden sind.

10. Verfahren nach einem der Ansprüche 1 bis 9, umfassend die folgenden Operationen:

E0) Auswählen einer Farbprobe durch einen Benutzer,
E1) Bestimmen einer Zieltönung ($L_t$,$a_t$,$b_t$) der Farbprobe,
E4) Erfassen des zweiten Modells ($M_2$) und Berechnen eines entsprechenden Satzes von Werten ($v_{i,t}$) für die Prozessvariablen ($p_i$) basierend auf dem zweiten Modell und auf der Zieltönung ($L_t$, $a_t$, $b_t$) unter Verwendung einer inversen Problemoptimierung des zweiten Modells.

11. Verfahren nach Anspruch 10, wobei nach Operation E4), wobei die Farbprobe durch eine optische Linse oder eine Linsenschablone gebildet ist, die Schritte A1) bis A3) wiederholt werden, indem die optischen Linsenproben und die Farbprobe berücksichtigt werden.

12. Verfahren nach einem der Ansprüche 10 und 11, wobei während der Operation E1) die Zieltönung $(L_t, a_t, b_t)$ mittels eines Bildsensors im sichtbaren Lichtbereich bestimmt wird.

13. Verfahren nach einem der Ansprüche 10 bis 12, wobei während der Operation E1) die Zieltönung $(L_t, a_t, b_t)$ auf der Basis mehrerer Bilder der Farbprobe bestimmt wird, die aus unterschiedlichen Winkeln und/oder unter unterschiedlichen Lichtbedingungen betrachtet werden.

14. Verfahren nach einem der Ansprüche 10 bis 13, wobei während der Operation E1) die Zieltönung $(L_t, a_t, b_t)$ durch Erfassen eines Bildes der Farbprobe und eines Farbmodells und durch Verarbeiten des Bildes bestimmt wird, so dass die Tönung $(L,a,b)$ der Farbprobe, die auf dem verarbeiteten Bild erscheint, der Tönung des Farbmodells entspricht.

**Revendications**

1. Procédé destiné à obtenir une lentille optique avec une teinte cible (Lt, at, bt) comprenant les étapes suivantes :

   - fourniture d'un procédé $(P_0)$ destiné à teinter des lentilles optiques et d'un ensemble de variables de procédé $(p_i)$ appropriées pour modifier les teintes des lentilles optiques, chaque variable de procédé $(p_i)$ pouvant prendre une valeur $(v_i)$ qui est sélectionnée dans un groupe de valeurs possibles,

   A1 - fourniture de plusieurs échantillons de lentille optique $(S_j)$ teintés selon ledit procédé $(P_0)$, chaque échantillon de lentille optique $(S_j)$ étant associé à un ensemble de valeurs $(v_{i,j})$ pour lesdites variables de procédé $(p_i)$ utilisées pour obtenir l'échantillon de lentille optique $(S_j)$ avec ledit procédé $(P_0)$,
   A2 - mesure d'une teinte mesurée $(L_j, a_j, b_j)$ de chaque échantillon de lentille optique $(S_j)$,

   - fourniture d'un premier modèle $(M_1)$ recevant en entrée un ensemble de valeurs pour les variables de procédé $(p_i)$ et donnant en sortie une première teinte modélisée pour une lentille optique teintée par ledit procédé $(P_0)$,
   - détermination de la première teinte modélisée $(L_{M1}, a_{M1}, b_{M1})$ de chaque échantillon de lentille optique $(S_j)$ au moyen dudit premier modèle avec lesdits ensembles de valeurs $(V_{i,j})$,
   - fourniture d'un deuxième modèle $(M_2)$ recevant en entrée un ensemble de valeurs pour les variables de procédé $(p_i)$ et donnant en sortie une deuxième teinte modélisée pour une lentille optique teintée par ledit procédé,
   A3 - affinage dudit deuxième modèle $(M_2)$ par minimisation d'une première fonction $(f^L, f^a, f^b)$ qui dépend d'un écart entre les teintes mesurées $(L_j, a_j, b_j)$ et la première teinte modélisée $(L_{M1}, a_{M1}, b_{M1})$ pour les échantillons de lentille optique $(S_j)$,
   - résolution d'un problème inverse pour inverser ledit deuxième modèle $(M_2)$, ledit deuxième modèle inversé recevant en entrée la teinte cible (Lt,at,bt) et donnant en sortie un ensemble utilisable de valeurs $(v_{i,t})$ pour les variables de processus produisant la teinte cible $(L_t, a_t, b_t)$, et réalisation du procédé $(P_0)$ au moyen dudit ensemble utilisable de valeurs $(v_{i,t})$ pour obtenir la lentille optique ayant la teinte cible (Lt,at,bt).

2. Procédé selon la revendication 1, dans lequel ledit premier modèle $(M_1)$ est basé sur une combinaison linéaire des valeurs $(v_i)$ des variables de procédé $(p_i)$, lesdites valeurs étant de préférence associées à une concentration de colorants.

3. Procédé selon la revendication 2, dans lequel ledit premier modèle $(M_1)$ est basé sur la loi de Beer-Lambert.

4. Procédé selon l'une quelconque des revendications 1 à 3, dans lequel une teinte est **caractérisée par** des paramètres de teinte $(L,a,b)$, et dans lequel le deuxième modèle $(M_2)$ est tel que chaque paramètre de teinte $(L,a,b)$ caractérisant ladite deuxième teinte modélisée dépend de la somme du paramètre de teinte correspondant $(L,a,b)$ caractérisant ladite première teinte modélisée et d'une fonction d'erreur $(Error^L, Error^a, Error^b)$, ladite première fonction $(f^L, f^a, f^b)$ dépendant également de ladite fonction d'erreur $(Error^L, Error^a, Error^b)$ .

5. Procédé selon la revendication 4, dans lequel chaque fonction d'erreur $(Error^L, Error^a, Error^b)$ comporte une somme de termes, chaque terme comprenant un coefficient multiplicateur déterminé à l'étape A3).

6. Procédé selon l'une quelconque des revendications 4 et 5, dans lequel la fonction d'erreur $(Error^L, Error^a, Error^b)$ comprend, pour chacun des paramètres de teinte $(L,a,b)$, un polynôme prédéterminé dont le terme comprend comme variables les variables de procédé $(p_i)$.

**7.** Procédé selon la revendication 6 dans lequel, pour établir ladite fonction d'erreur (Error$^L$, Error$^a$, Error$^b$), un procédé de régularisation est appliqué audit polynôme prédéterminé de manière à identifier, parmi ses termes, les termes les plus pertinents et au moins un terme à supprimer, ladite fonction d'erreur (Error$^L$, Error$^a$, Error$^b$) étant ensuite déterminée uniquement au moyen desdits termes pertinents.

**8.** Procédé selon l'une quelconque des revendications 4 à 7, lesdits échantillons de lentille optique (S$_j$) étant divisés en au moins deux groupes qui sont distincts et disjoints, l'étape A3) étant réalisée sur un premier desdits groupes afin de déterminer lesdites fonctions d'erreur (Error$^L$, Error$^a$, Error$^b$), et le procédé comprenant les étapes suivantes :

> a41) acquisition de l'ensemble de valeurs (v$_{i,j}$) pour chaque échantillon de lentille optique appartenant au deuxième desdits groupes,
> a42) mesure de la teinte mesurée (L$_j$,a$_j$,b$_j$) de chaque échantillon de lentille optique (S$_j$) appartenant au deuxième desdits groupes,
> a43) prédiction de la teinte (L,a,b) de chaque échantillon de lentille optique (S$_j$) appartenant au deuxième desdits groupes, sur la base dudit deuxième modèle et de l'ensemble de valeurs (v$_{i,j}$) acquises à la sous-étape a41),
> a44) vérification de ladite fonction d'erreur en fonction de la différence entre les teintes mesurées (L$_j$,a$_j$,b$_j$) et les teintes prédites (L,a,b).

**9.** Procédé selon une des revendications 1 à 8 dans lequel, à l'étape A1), les ensembles de valeurs (V$_{i,j}$) sont tous différents les uns des autres.

**10.** Procédé selon une des revendications 1 à 9, comprenant les opérations suivantes :

> E0) sélection d'un échantillon de couleur par un utilisateur,
> E1) détermination d'une teinte cible (L$_t$,a$_t$,b$_t$) dudit échantillon de couleur,
> E4) acquisition dudit deuxième modèle (M$_2$) et calcul d'un ensemble correspondant de valeurs (v$_{i,t}$) pour les variables de procédé (p$_i$) sur la base du deuxième modèle et de ladite teinte cible (L$_t$,a$_t$,b$_t$), au moyen d'une optimisation de problème inverse du deuxième modèle.

**11.** Procédé selon la revendication 10 dans lequel, l'échantillon de couleur étant formé par une lentille optique ou un modèle de lentille, après l'opération E4), lesdites étapes A1) à A3) sont répétées avec prise en compte desdits échantillons de lentille optique et dudit échantillon de couleur.

**12.** Procédé selon une des revendications 10 et 11 dans lequel, lors de l'opération E1), la teinte cible (L$_t$, a$_t$, b$_t$) est déterminée au moyen d'un capteur d'images, dans le domaine de la lumière visible.

**13.** Procédé selon une des revendications 10 à 12 dans lequel, lors de l'opération E1), la teinte cible (Lt,at,bt) est déterminée sur la base de plusieurs images dudit échantillon de couleur, vues sous des angles différents et/ou dans différentes conditions de lumière.

**14.** Procédé selon une des revendications 10 à 13 dans lequel, lors de l'opération E1), la teinte cible (L$_t$, a$_t$, b$_t$) est déterminée par acquisition d'une image dudit échantillon de couleur et d'un modèle de couleur, et par traitement de ladite image de telle sorte que la teinte (L,a,b) dudit échantillon de couleur apparaissant sur ladite image traitée corresponde à la teinte dudit modèle de couleur.

**Fig.1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3605202 A1
- JP 2018191073 A
- EP 1637313 A
- US 6534443 B
- US 6840621 B